## Europäisches Patentamt
## European Patent Office
## Office européen des brevets

(19)

(11) Veröffentlichungsnummer: **0 235 588**
**B1**

(12)                 **EUROPÄISCHE PATENTSCHRIFT**

(45) Veröffentlichungstag der Patentschrift: 06.06.90

(51) Int. Cl.⁵: **B 23 K 7/00,** B 22 D 11/126

(21) Anmeldenummer: 87101340.5

(22) Anmeldetag: 31.01.87

(54) Verfahren zum Entfernen des beim Brennschneiden entstehenden Schlackebartes.

(30) Priorität: 06.03.86 DE 3607285

(43) Veröffentlichungstag der Anmeldung:
09.09.87 Patentblatt 87/37

(45) Bekanntmachung des Hinweises auf die
Patenterteilung:
06.06.90 Patentblatt 90/23

(84) Benannte Vertragsstaaten:
FR GB

(56) Entgegenhaltungen:
EP-A-0 017 807
EP-A-0 074 474
DE-A-2 925 419
DE-B-2 839 515

(73) Patentinhaber: MESSER GRIESHEIM GMBH
Hanauer Landstrasse 330
D-6000 Frankfurt/Main (DE)

(72) Erfinder: Schmunck, Karlheinz
Mozartstrasse 27
D-6052 Mühlheim/Main (DE)

Courier Press, Leamington Spa, England.

## Beschreibung

Die Erfindung betrifft die Verwendung eines Anstech- oder Anschneidverfahrens mit einem Schneidbrenner sowie eine Vorrichtung zur Durchführung dieses Verfahrens.

Bei Stranggießanlagen wird der erzeugte Strangguß unterteilt. Bei den dabei zum Einsatz kommenden Brennschneidmaschinen entstehen längs der Schnittlinie, an der Unterseite der Stranggußstücke Schlackebärte, deren nachträgliches Entfernen durch den damit verbundenen Zeit- und Maschinenaufwand hohe zusätzliche Kosten bei der Herstellung von Stranggußstücken verursacht.

Um diese Nachteile zu vermeiden, ist es aus der DE—A1—27 18 748 bekannt, den Brenner unter dem Strangguß so anzuordnen, daß der Schneidstrahl von unten nach oben gerichtet ist. Durch dieses Verfahren soll die Entstehung von Schlackebärten vermieden werden. Bei diesem Verfahren bilden sich jedoch Ablagerungen an den oberen Rändern der Schnittfuge aus, und man erhält keine sauberen und ebenen Flächen der Schnittfuge. Durch die weiterhin entstehende starke Rauchentwicklung und durch den im großen Umkreis um die Schneidstelle versprühten Auswurf werden unerwünschte Verschmutzungen verursacht, die wiederum durch aufwendige Maßnahmen vermieden werden müssen.

Es ist weiterhin bekannt, den Schlackebart durch Flämmen zu entfernen. Bei der Einrichtung nach der DE—C—12 87 421 erfolgt dies dadurch, daß der Flämmbrenner ausschließlich auf die den Schlackebart tragende Unterseite des Werkstükkes, und zwar in einer bestimmten Winkelstellung zum Werkstück gerichtet ist. Somit wird der Schlackebart in dem Bereich des Werkstückes, wo er gegenständlich sichtbar vorhanden ist, durch ein oder mehrere Brenner aufgeschmolzen.

Darüber hinaus ist es aus der EP—A1—00 17 807 bekannt, Sauerstoff während des Schneidens, durch eine nachgeführte 02-Blasdüse, in die austretende Schlacke an der Unterseite des Materials zu blasen, um eine Nachoxidation der Schlacke zu erreichen.

In der EP—A1—01 21 589 ist zur Schlackebartbeseitigung ein zu der Brennerbewegung eine Synchronbewegung ausführende Bartbeseitigungsdüse vorgesehen, aus der ein Gasstrom austritt. Durch diese Maßnahme sollen eventuell an der Unterseite sich ausbildende Schlackebärte weggeblasen bzw. weggedrückt werden.

Nach der Lehre der DE—A1—29 25 419 sollen die Schlackebärte mittels eines aus einer oder mehrerer Düsen abgegebenen, thermischen oder kinetische Energie aufweisenden Strahles beseitigt werden. Die Düse oder Düsen sollen ebenfalls im Gleichlauf mit dem Schneidbrenner bewegt werden und sind unter einem Winkel zur Schneidrichtung auf die Schlackebärte gerichtet.

Der Erfindung liegt die Aufgabe zugrunde, ein wirtschaftliliches Verfahren zum schnellen Entfernen von Schlackebärten in Linie, d.h. während des Schneidens bzw. sofort anschließend zu schaffen, mit dem eine kleine Schneidfase ohne neu entstehende Schlackebärte erreicht wird.

Diese Aufgabe wird durch die kennzeichnenden Merkmale des Anspruchs 1 gelöst.

Dabei wird im unteren Bereich der Schnittfuge durch erneutes Anschneiden oder Anstechen mit einem Zusatzbrenner und einer entsprechenden Schneiddüse (breite Schnittfuge) der Schlackebart an der metallischen Verbindung mit dem Grundmaterial getrennt. Dies kann immer kurz bevor der Schnitt beendet ist, entweder während des Schneidens oder durch eine kurzzeitige Unterbrechung des Schneidvorganges, erfolgen. Vorzugsweise ist dieses Verfahren an Knüppeln oder Blöcken (100 φ oder 250 bis 400 mm Breite) anzuwenden, es kann jedoch vom Verfahren her bis zu Materialien von 2100 bis 2400 mm Breite eingesetzt werden.

Die mit der Erfindung erzielten Vorteile bestehen in der Erhöhung der Schneidgeschwindigkeit beim Entfernen der Schlackebärte. Durch die so erzielte Verringerung der Hauptzeit wird eine wirtschaftliche Entfernung des Schlackebartes erreicht und darüber hinaus eine praktikable Lösung, die im Betrieb vollautomatisch arbeitet.

Ein Ausführungsbeispiel der Erfindung ist in der Zeichnung dargestellt und wird im folgenden näher beschrieben.

Es zeigen:

Fig. 1 eine schematische Anordnung eines Zusatzschneidbrenners zur Entfernung eines mit einem Stranggußknüppel fest verbundenen Schlackebartes;

Fig. 2 u. 3 schematische Darstellungen der Werkstückkanten von Knüppeln mit bzw. ohne Schlackebart.

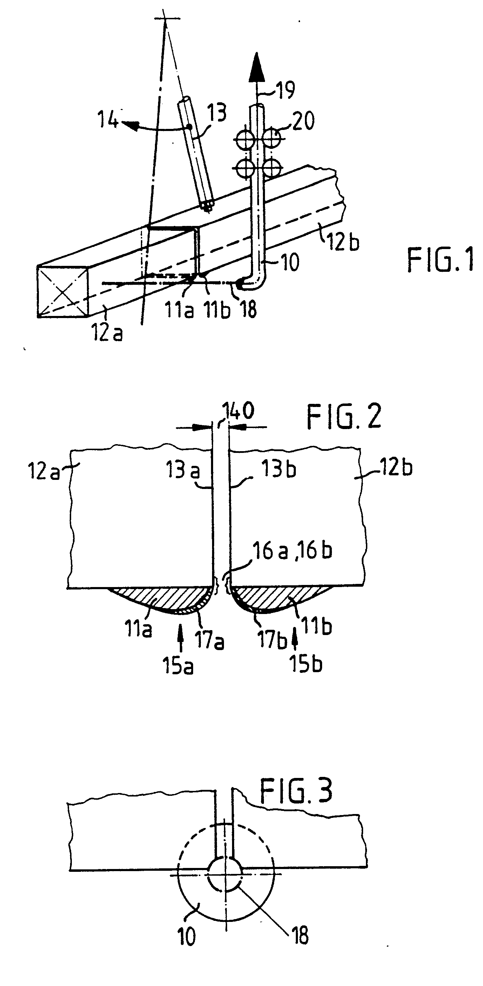

In Fig. 1 ist ein Zusatzschneidbrenner 10, insbesondere ein Autogenschneidbrenner, zum Entfernen von mit Stranggußstücken 12a, 12b fest verbundenen Schlackebärten 11a, 11b (siehe auch Fig. 2) schematisch dargestellt. Unter Stranggußstücken 12a, 12b werden hierbei alle in Stranggußanlagen heiß oder kaltgeschnittenen Teile, wie Rundknüppel, Knüppel und Brammen verstanden.

In der Stranggußanlage werden in der Regel Mehrfachlängen von beispielsweise 8 000 mm geschnitten, die anschließend auf einem Ablaufrollgang mittels Brennschneidautomaten weiter unterteilt werden. Bei dem Brennschneidvorgang werden die Stranggußstücke 12a, 12b mit einem Hauptschneidbrenner 13 längs- oder entsprechend Pfeilrichtung 14 quergeteilt. Dabei entsteht eine Schneidschlacke, die während des Schneidens entlang den Schnittflächen 13a, 13b nach unten fließt (siehe Fig. 2).

Nach dem Verlassen der von den Schnittflächen 13a, 13b begrenzten Schnittfuge 140 fließt die Schneidschlacke adhäsionsbedingt um die unteren Kanten der Stranggußstücke 12a, 12b in Richtung auf die Werkstückunterseiten 15a, 15b. Auf diese Weise bildet sich entlang der Schnittfuge 140 auf den Unterseiten 15a, 15b je ein sogenannter Schlackebart 11a, 11b. Die Schlackebärte 11a, 11b bestehen aus einem "Gemisch" aus Eisenoxid und Eisen, wobei der Reineisenanteil prozentual in der Regel geringer ist als der Eisenoxidanteil. Die Schlackebärte 11a, 11b sind mit ihrer überwiegenden Materialmenge der Werkstückunterseite 15a, 15b verhältnismäßig "lose" zugeordnet, d.h. es besteht zwischen den Schlackebärten 11a, 11b und der Werkstückunterseite 15a, 15b eine nur geringe Haftverbindung. Im Gegensatz dazu bildet sich jedoch im Bereich 16a, 16b der Schnittfläche 13a, 13b während des Brennschneidvorganges ein dünner Metallfilm 17a, 17b mit hohem Eisenanteil aus, der fest mit dem Grundwerkstoff der Schnittfläche 13a, 13b verbunden ist und in die Schlackebärte 11a, 11b übergeht.

Durch diesen Metallfilm 17a, 17b erfolgt die feste Verbindung der Schlackebärte mit dem Werkstück, nämlich im Bereich 16a, 16b der Schnittfläche 13a, 13b.

Nach dem Trennschnitt mit dem Hauptschneidbrenner 13 werden die Schlackebärte 11a, 11b mit dem Zusatzschneidbrenner 10 entfernt, welcher in einer Führungseinrichtung 20 gehalten ist. Dabei ist der Schneidstrahl (Schneidsauerstoffstrahl von Vorwärmflammen) 18 parallel zur Werkstückunterseite 15a, 15b gerichtet. Durch Bewegung z. B. durch Motorgetriebe oder pneumatisch bzw. hydraulich betätigte Zylinder des Zusatzschneidbrenners 10 und damit des Schneidstrahles 18 in Pfeilrichtung 19 erfolgt ein erneutes Anschneiden in die Schnittfuge 140, der Bereich 16a, 16b wird von den Schnittflächen 13a, 13b abgetrennt und es bildet sich eine Geometrie entsprechend Fig. 3 aus.

Selbstverständlich kann der Zusatzschneidbrenner 10 auch direkt teilweise über dem Bereich 16a, 16b positioniert werden (siehe Fig. 3), so daß die Schlackebärte 11a, 11b während des sich anschließenden Anstech/Lochstechvorganges abgetrennt werden. Dabei ist eine Bewegung des Zusatzschneidbrenners in Pfeilrichtung 19 entbehrlich.

Durch das Abschneiden der Metallfilm-Stranggußverbindung im Bereich 16a, 16b wird somit in vorteilhafter Weise nicht nur der Metallfilm sondern die an diesem Metallfilm haftenden Schlackebärte 11a, 11b mitentfernt. Beide Schlackebärte 11a, 11b fallen dabei aufgrund ihrer kaum vorhandenen Haftung nahezu gleichzeitig ab, und zwar ohne daß sich beim Anschneiden ein erneuter Schlackebart bildet.

**Patentansprüche**

1. Verwendung eines Anstech- oder Anschneidverfahrens mit einem Schneidbrenner, dadurch gekennzeichnet, daß durch das Anschneiden oder Anstechen mit einem als Schneidbrenner (10) ausgebildeten Zusatzbrenner Schlackebärte (11a, 11b) durch einen parallel zur Werkstückunterseite (15a, 15b) und in die Schnittfuge (140) gerichteten, aus dem Schneidbrenner (10) austretenden Schneidstrahl (18) entfernt werden, wobei Bereiche (16a, 16b) der Schnittflächen (13a, 13b) die sich unmittebar über der Schlackenbärte (11a,

11b) befinden, und die beiden Schlackebärte (11a, 11b) nahezu gleichzeitig abgetrennt werden.

2. Verwendung eines Anstech- oder Anschneidverfahrens nach Anspruch 1, dadurch gekennzeichnet, daß kurz bevor der Brennschnitt der Schnittfuge (140) (Pfeilrichtung 14, Fig. 1) beendet ist, die Schlackebärte (11a, 11b) abgetrennt werden.

3. Verwendung eines Anstech- oder Anschneidverfahrens nach Anspruch 1, dadurch gekennzeichnet, daß der aus dem Schneidbrenner (10) austretende Schneidstrahl (18) tangential (Pfeilrichtung 19, Fig. 1) in die Schnittfuge bewegt wird.

4. Einrichtung zum Entfernen von Schlackebärten (11a, 11b) mit einer Führungsvorrichtung (20), dadurch gekennzeichnet, daß an der Führungsvorrichtung (20) ein Zusatzschneidbrenner (10) mit parallel zur Werkstückunterseite (15a, 15b) austretendem und in die Schnittfuge gerichtetem Schneidstrahl (18) angeordnet ist.

5. Einrichtung nach Anspruch 4, dadurch gekennzeichnet, daß der Zusatzschneidbrenner (10) mittels der Führungsvorrichtung (20) vertikal (Pfeilrichtung 19) verstellbar ist.

**Revendications**

1. Mise en oeuvre d'un procédé de piquage ou de découpe avec un chalumeau d'oxycoupage, procédé caractérisée en ce que, par découpage ou piquage avec un chalumeau supplémentaire revêtant la forme d'un chalumeau de coupe (10), des barbes de scories (11a, 11b) sont enlevées par un jet de coupe (18) sortant du chalumeau de coupe (10) parallèlement aux faces inférieures (15a, 15b) des pièces de coulée et dirigées dans le joint de coupe (140), les zones (16a, 16b) des surfaces de coupe (13a, 13b) qui se trouvent directement au-dessus des barbes de scories (11a, 11b) ainsi que les deux barbes de scories (11a, 11b) étant détachées presque en même temps.

2. Mise en oeuvre d'un procédé de piquage ou de découpage selon la revendication 1, caractérisée en ce que les barbes de scories (11a, 11b) sont détachées peu avant que la coupe au chalumeau du joint de coupe (140) (direction de la flèche 14, figure 1) soit terminée.

3. Mise en oeuvre d'un procédé de piquage ou de découpage selon la revendication 1, caractérisée en ce que le jet de coupe (18) sortant du chalumeau de coupe (10) est déplacé tangentiellement (direction de la flèche 19, figure 1) dans le joint de coupe.

4. Installation pour enlever des barbes de scories (11a, 11b), avec un dispositif de guidage (20), installation, caractérisée en ce que sur le dispositif de guidage (20) est disposé un chalumeau de coupe supplémentaire (10) dont le jet de coupe (18) sort parallèlement aux faces inférieures (15a, 15b) des pièces de coulée et est dirigé dans le joint de coupe.

5. Installation selon la revendication 4, caractérisée en ce que le chalumeau de coupe supplémentaire (10) est susceptible d'être déplacé verticalement (direction de la flèche 19) au moyen du dispositif de guidage (20).

**Claims**

1. Use of a broaching or part-cutting method with a cutting torch, characterized in that, as a result of the part-cutting or broaching with a supplementary torch designed as a cutting torch (10), burrs of slag (11a, 11b) are removed by a cutting jet (18) issuing from the cutting torch (10), parallel to the underside of the workpiece (15a, 15b) and directed into the kerf (140), the areas (16a, 16b) of the cut faces (13a, 13b) which are located directly above the burrs of slag (11a, 11b), and the two burrs of slag (11a, 11b) being stripped off almost simultaneously.

2. Use of a broaching or part-cutting method according to Claim 1, characterized in that the burrs of slag (11a, 11b) are stripped off shortly before the flame cut of the kerf (140) (arrow direction 14, Figure 1) is complete.

3. Use of a broaching or part-cutting method according to Claim 1, characterized in that the cutting jet (18) issuing from the cutting torch (10) is moved tangentially (arrow direction 19, Figure 1) into the kerf.

4. Apparatus for removing burrs of slag (11a, 11b) with a guide device (20), characterized in that a supplementary cutting torch (10), with a cutting jet (18) issuing parallel to the underside (15a, 15b) of the workpiece and directed into the kerf, is arranged on the guide device (20).

5. Apparatus according to Claim 4, characterized in that the supplementary cutting torch (10) is vertically adjustable (arrow direction 19) by means of the guide device (20).

FIG.1

FIG.2

FIG.3